# EUROPÄISCHE PATENTANMELDUNG

(11) **EP 1 026 186 A1**
(43) Veröffentlichungstag der Anmeldung: **09.08.2000**
(21) Anmeldenummer: 00101562.7
(22) Anmeldetag: 27.01.2000
(51) Int. Cl.: C08G 18/08, C08G 18/12, C08G 18/36, C08G 18/66, C09D 175/14

(54) **Oxydativ trocknende Polyurethandispersionen**

(30) Priorität: 04.02.1999 AT 14399
(71) Anmelder: Vianova Resins AG, 8402 Werndorf (AT)
(72) Erfinder: Schafheutle, Markus, Dr., 8044 Graz (AT); Awad, Rami-Raimund, Dr., 8042 Graz (AT); Gsöll, Hannelore, 8055 Graz (AT); Anner, Birgit, 8020 Graz (AT); Arzt, Anton, 8430 Tillmitsch (AT); Glettler, Martina, 8041 Graz (AT); Lerch, Andreas, 8072 Fernitz (AT); Petritsch, Gerlinde, 8020 Graz (AT); Wango, Jörg, 8142 (AT)
(74) Vertreter: Zounek, Nikolai, Dipl.-Ing.

(57) **Zusammenfassung**

Oxydativ trocknende wäßrige Polyurethan-Dispersionen, herstellbar durch Umsetzung von trocknenden und/oder halbtrocknenden Ölen mit niedermolekularen Hydroxyverbindungen mit zwei oder mehr Hydroxylgruppen zu Verbindungen, die im Mittel mindestens eine Hydroxylgruppe und mindestens einen Rest einer Fettsäure mit mindestens einer olefinischen Doppelbindung enthalten, anschließender Umsetzung dieser Verbindungen gemeinsam mit hochmolekularen Polyolen, Verbindungen mit mindestens zwei gegenüber Isocyanat reaktiven Gruppen und mindestens einer Säuregruppe oder einer nach Neutralisation zu einer kationischen Verbindung führenden Gruppe mit mehrfunktionellen Isocyanaten zu Präpolymeren mit einem Massenanteil an nicht umgesetzten Isocyanatgruppen von 0,1 bis 4 %, anschließende Neutralisation mit tertiären Aminen und Überführung in die wäßrige Phase, ein Verfahren zu ihrer Herstellung und ihre Verwendung zur Lackierung von Holz.

## Beschreibung

Bei der Lackierung von Holz werden häufig feuchtigkeitshärtende Systeme eingesetzt. Solche Systeme enthalten vielfach Lösungsmittel sowie noch Reste freier aromatischer Isocyanate. Dies ist aus arbeitshygienischen Gründen zu vermeiden.

Es bestand daher die Aufgabe, neue Bindemittel für die Holzlackierung zu entwickeln, die nicht über Isocyanate gehärtet werden, und bei denen auf die Gegenwart von Lösungsmitteln weitgehend oder sogar ganz verzichtet werden kann.

Von den Alkydharzen ist die Eigenschaft bekannt, daß sie an der Luft durch Vernetzung der aus den ungesättigten Fettsäuren stammenden Doppelbindungen oxydativ trocknen. Baut man in Polyurethane solche von ungesättigten Fettsäuren abgeleiteten Gruppen ein, so lassen sich aus diesen Polyurethanen wäßrige Dispersionen herstellen, die lufttrocknende Beschichtungen ergeben.

Es hat sich gezeigt, daß solche Polyurethandispersionen für die Holzlackierung besonders geeignet sind.

Die Erfindung betrifft daher oxydativ trocknende wäßrige Polyurethan-Dispersionen, dadurch gekennzeichnet, daß sie erhalten werden durch Umsetzung von trocknenden und/oder halbtrocknenden Ölen **A** mit niedermolekularen Hydroxyverbindungen **B** mit zwei oder mehr Hydroxylgruppen zu Verbindungen **AB**, die im Mittel mindestens eine Hydroxylgruppe und mindestens einen Rest einer Fettsäure mit mindestens einer olefinischen Doppelbindung enthalten, anschließender Umsetzung der Verbindungen **AB** gemeinsam mit hochmolekularen Polyolen **C**, weiteren Verbindungen ausgewählt aus Verbindungen **D** mit mindestens zwei gegenüber Isocyanat reaktiven Gruppen und mindestens einer Säuregruppe und Verbindungen **D** 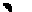 mit mindestens zwei gegenüber Isocyanat reaktiven Gruppen und einer funktionellen Gruppe, die nach Neutralisation zu einer kationischen Gruppe führt, mit mehrfunktionellen Isocyanaten **E** zu Präpolymeren **ABCDE** mit einem Massenanteil an nicht umgesetzten Isocyanatgruppen von 0,1 bis 4 %, bezogen auf die Masse des Präpolymeren, gegebenenfalls Umsetzung des Präpolymeren **ABCDE** mit einer Verbindung **F** mit einer gegenüber Isocyanat reaktiven Gruppe, anschließende Neutralisation mit tertiären Aminen **G**, gegebenenfalls Umsetzung noch vorhandener überschüssiger Isocyanatgruppen durch Zugabe von Kettenverlängerungsmitteln **H** mit mindestens zwei primären oder sekundären Aminogruppen und Überführung in die wäßrige Phase.

Die Erfindung betrifft weiter ein Verfahren zur Herstellung der oxydativ trocknenden wäßrigen Polyurethan-Dispersionen, wobei in einer ersten Stufe a) trocknende oder halbtrocknende Öle **A** mit einer Jodzahl von bevorzugt über 100 g/(100 g) mit niedermolekularen Hydroxyverbindungen **B** mit zwei oder mehr Hydroxylgruppen pro Molekül umgesetzt werden. Diese Umsetzung (Umesterung) wird bevorzugt unter alkalischer Katalyse durchgeführt, besonders bevorzugt ist der Zusatz von AlkalimetallHydroxiden, in einem Anteil von 5 bis 200 mg, bevorzugt 15 bis 100 mg, je 100 g der Mischung der Komponenten **A** und **B**. Die Umesterung wird bevorzugt bei einer Temperatur von 150 bis 250 °C, besonders bevorzugt bei 200 bis 240 °C durchgeführt. In der zweiten Stufe b) wird dieses Umesterungsprodukt **AB** vorgelegt; das hochmolekulare Polyol **C** und gegebenenfalls ein weiterer Katalysator werden zugegeben und auf eine erhöhte Temperatur von 30 bis 100 °C, bevorzugt von 50 bis 80 °C, erwärmt. Die Komponente **D** bzw. **D'** wird anschließend, bevorzugt gelöst in einem aprotischen Lösungsmittel wie beispielsweise N-Methylpyrrolidon, zugegeben und mit den Komponenten in der Vorlage vermischt. Anschließend wird die Isocyanat-Komponente **E** zugefügt. Es wird so lange bei der genannten Reaktionstemperatur gehalten, bis die Isocyanat-Konzentration sich nicht mehr merklich verändert. Gegebenenfalls kann nach diesem Schritt eine gegenüber Isocyanat monofunktionelle Verbindung **F** jetzt zugesetzt werden, wobei deren Menge bevorzugt so gewählt wird, daß durch diese Umsetzung die noch vorhandenen Isocyanat-Gruppen vollständig verbraucht werden. Diese Mischung wird in der Stufe c) während 10 bis 20 Minuten in eine 50 bis 90 °C, bevorzugt 70 bis 80 °C warme Lösung des tertiären Amins **G** in entionisiertem Wasser (Massenanteil des Amins im Wasser 10 bis 40 %, bevorzugt 20 bis 35 %) eingerührt. Soweit noch freie Isocyanatgruppen in dem Reaktionsprodukt vorhanden sind, kann ein Kettenverlängerungsmittel **H**, das bevorzugt zwei oder mehr primäre oder sekundäre Aminogruppen oder auch Hydrazingruppen enthält, bevorzugt in Form einer wäßrigen Lösung, hinzugefügt werden. Eine solche Kettenverlängerungsreaktion benötigt üblicherweise eine zusätzliche Reaktionszeit von ca. 10 bis 15 Minuten. Durch Zugabe von weiterem Wasser im Schrift d) wird eine Dispersion bevorzugt mit einem Festkörper-Massenanteil von ca. 20 bis ca. 40 %, besonders bevorzugt ca. 25 bis ca. 35 %, hergestellt.

Schließlich betrifft die Erfindung auch die Verwendung der oxydativ trocknenden wäßrigen Polyurethan-Dispersionen zur Herstellung von Bindemitteln für die Beschichtung von Holz, Kunststoffen, Metallen sowie flexiblen Substraten wie Leder, Papier und Karton. Speziell für die letztgenannten Verwendungen ist die Kombination von hoher Biegsamkeit und großer Oberflächenhärte wesentlich, die sich durch den Einsatz der erfindungsgemäßen oxydativ trocknenden wäßrigen Polyurethan-Dispersionen erzielen läßt.

Als Verbindungen **A** sind geeignet die sogenannten trocknenden und halbtrocknenden Öle, bevorzugt mit einer Jodzahl von 100 g/(100 g) und darüber. (Die Jodzahl gibt das Verhältnis der Masse an Jod **m**(J) zu der Masse der Probe **m**_{B} der ungesättigten Verbindung an, die diese Masse an Jod unter Entfärbung der Jodlösung und Verbrauch der Doppelbindungen addieren kann; die übliche Maßeinheit ist "g/100 g".) Geeignete Öle sind beispielsweise Sojaöl (120 bis 136), Safloröl (140 bis 150), Leinöl (155 bis 205), Sonnenblumenöl (125 bis 144), Rapsöl (105 bis 115), Rizinusöl, Holzöl, Baumwollsaatöl (109 bis 116) sowie auch tierische Öle (in Klammern jeweils Jodzahl in g/100 g).

Als Polyole **B** lassen sich zwei- und mehrwertige aliphatische Hydroxyverbindungen mit 2 bis 12 Kohlenstoffatomen einsetzen, besonders bevorzugt sind die Dihydroxyverbindungen wie Glykol, 1,2- und 1,3-Propylenglykol und 1,4-Butandiol, und Trihydroxyverbindungen Glycerin und Trimethylolpropan und -äthan. Als niedermolekulare Polyole werden hier Polyole mit einer molaren Masse von unter 400 g/mol bezeichnet. Es lassen sich jedoch auch höhere Alkohole mit 4 und mehr Hydroxylgruppen einsetzen, wie Ditrimethylolpropan, Erythrit und Pentaerythrit, Sorbit, Mannit, Dipentaerythrit und auch Zucker wie Glucose. Es ist jedoch darauf zu achten, daß die Funktionalität der Verbindungen **AB** nicht zu hoch wird, bevorzugt sollte sie unter 3, besonders bevorzugt unter 2,5 bleiben. Dies läßt sich beispielsweise auch dadurch steuern, daß die höherwertigen Hydroxyverbindungen in Mischung mit Diolen wie Glykol, 1,2- und 1,3-Propylenglykol sowie oligomeren Oxyalkylen-, insbesondere Oxyäthylenglykolen mit Polymerisationsgraden von 2 bis 10 eingesetzt werden.

Geeignete Polyole **C** sind hochmolekulare Polyäther-Polyole, Polyester-Polyole, Polycarbonat-Polyole und Polyurethan-Polyole mit einer zahlenmittleren molaren Masse von 400 bis 20 000 g/mol, bevorzugt von 600 bis 15 000 g/mol, und besonders bevorzugt von 800 bis 10 000 g/mol. Sie weisen bevorzugt zwei Hydroxylgruppen pro Molekül auf. Die Polyäther-Polyole leiten sich beispielsweise ab von Äthylenoxid (Oxiran), 1,2-Propylenoxid (Methyloxiran) und Oxacyclopentan (Tetrahydrofuran). Es lassen sich auch gemischte Polyäther einsetzen, beispielsweise solche mit Blöcken von aufeinanderfolgenden Oxyäthylen- und Oxypropylen-Einheiten. Besonders bevorzugt sind solche gemischten Polyäther-Polyole, in denen der Massenanteil an Oxyäthylenbausteinen im Polyätherpolyol mindestens 20 % beträgt. Ebenfalls brauchbar im Rahmen der Erfindung sind bevorzugt Dihydroxy-Polyester, die durch Kondensation von niedermolekularen Dihydroxyverbindungen, bevorzugt aliphatischen linearen, verzweigten oder cyclischen Diolen mit Dicarbonsäuren, bevorzugt aliphatischen Dicarbonsäuren, erhalten werden. Zum Teil oder nahezu vollständig lassen sich die Dihydroxyverbindungen und die Dicarbonsäuren auch durch Lactone wie Caprolacton ersetzen. Beispielsweise durch ringöffnende Polyaddition von Diolen an cyclische Carbonate oder auch auf andere bekannte Weise lassen sich Polycarbonat-Polyole herstellen. Durch Umsetzen von einem Unterschuß an Diisocyanaten und Dihydroxyverbindungen erhält man Polyurethan-Diole, die beide ebenfalls für die Erfindung brauchbar sind.

Besonders bevorzugt werden Polyäther-Polyole und Polyester-Polyole, insbesondere die entsprechenden Diole, als Komponente **C** eingesetzt.

Als Komponente **D** werden Verbindungen mit mindestens zwei gegenüber Isocyanat reaktiven Gruppen ausgewählt aus Hydroxyl-, Amino- und Mercapto-Gruppen und Säuregruppen ausgewählt aus Carbonsäure-, Sulfonsäure- und Phosphonsäuregruppen eingesetzt. Bevorzugt werden Verbindungen mit genau zwei gegenüber Isocyanat reaktiven Gruppen und mindestens einer Säuregruppe, insbesondere Verbindungen mit Hydroxylgruppen und Carbonsäuregruppen. Bevorzugt werden daher als Verbindungen **D** Dihydroxysäuren, Diaminosäuren oder Hydroxyaminosäuren eingesetzt. Geeignete Dihydroxycarbonsäuren sind vor allem Dimethylolpropionsäure und Weinsäure. Es lassen sich auch Verbindungen **D'** einsetzen, die neben mindestens zwei gegenüber Isocyanat reaktiven Gruppen eine funktionelle Gruppe aufweisen, die nach Neutralisation zu einer kationischen Gruppe führt, z. B. zu einer Ammoniumgruppe. Geeignete Verbindungen sind tertiäre Amine mit zwei Hydroxylgruppen oder tertiäre Amine mit zwei primären oder sekundären Aminogruppen, beispielsweise N-Methyl-diäthanolamin. Als Neutralisationsmittel **G** werden in diesem Fall monofunktionelle Säuren (z. B. Ameisen-, Essig-, Milchsäure) eingesetzt, aber auch mineralische Säuren wie beispielsweise Salzsäure.

Als Komponente **E** werden mehrfunktionelle aliphatische, aromatische und gemischt aromatisch-aliphatische Isocyanate eingesetzt, bevorzugt sind alle (cyclo)aliphatischen, aromatischen oder gemischt aromatisch-aliphatischen Diisocyanate, wie sie üblicherweise in der Polyurethanchemie verwendet werden.

Beispiele für geeignete Isocyanate sind Trimethylendiisocyanat, Tetramethylendiisocyanat, Pentamethylendiisocyanat, Hexamethylendiisocyanat, 1,2-Propylendiisocyanat, Äthyläthylendiisocyanat, 2,3-Dimethyläthylendiisocyanat, 1-Methyltrimethylendiisocyanat, 2-Methylpentan-1,5-diisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat (TDI), 2,6-Toluylendiisocyanat (TDI), 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan (IPDI), Bis-(4-isocyanato-cyclohexyl)methan (BICM), 4,4'-Diisocyanatodiphenyläther, 2,3-Bis(8-isocyanatooctyl)-4-octyl-5-hexylcyclohexen, die isomeren Trimethylhexamethylendiisocyanate, Tetramethylxylylendiisocyanat (TMXDI), Isocyanurate von obigen Diisocyanaten sowie Allophanate von obigen Diisocyanaten. Gemische solcher Di- oder Polyisocyanate können ebenfalls eingesetzt werden. Besonders bevorzugt werden TDI, TMXDI, BICM und IPDI. Sofern eine Kettenverlängerung im wäßrigen Medium vorgenommen werden soll, ist es bevorzugt, daß entweder nur solche Isocyanate eingesetzt werden bei denen die Isocyanatgruppen an ein aliphatisches Kohlenstoffatom gebunden sind, oder ein Gemisch von aromatischen und aliphatischen Isocyanaten eingesetzt wird, wobei die Stoffmenge der Hydroxylgruppen bzw. der anderen gegenüber Isocyanat reaktiven Gruppen in den Komponenten **AB**, **C** und **D** bzw. **D'** stets größer ist als die Stoffmenge der aromatisch gebundenen Isocyanatgruppen in **E**.

Geeignete Kettenabbrecher **F** sind alle Verbindungen mit genau einer gegenüber Isocyanat reaktiven Gruppe oder mit zwei oder mehr gegenüber Isocyanat reaktiven Gruppen, deren Reaktivität stark unterschiedlich ist. Besonders bevorzugt werden Verbindungen mit einer Hydroxyl- oder primären oder sekundären Aminogruppe, insbesondere (cyclo)aliphatische Verbindungen. Geeignete Hydroxylverbindungen sind aliphatische lineare, verzweigte und cyclische Alkohole mit insbesondere 4 bis 20 Kohlenstoffatomen, die auch ungesättigt sein können und auch zusätzlich andere Gruppen enthalten können, die nicht gegenüber Isocyanaten reaktiv sind. Beispiele für solche Verbindungen sind die linearen Alkohole n- oder sek.-Butanol, die isomeren Hexyl- und Octylalkohole, Decyl-, Dodecyl- und Tridecylalkohol sowie Stearylalkohol, Cyclohexanol, Benzylalkohol, Hydroxyester wie Äthylenglykol-Monoacetat oder Dipropylenglykol-Monoacetat, Hydroxyäthylacrylat und -methacrylat, Hydroxypropyl- und Hydroxybutyl-(meth)acrylat. Ebenfalls geeignet sind aliphatische lineare, verzweigte und cyclische Dialkylamine mit 2 bis 18 Kohlenstoffatomen in der Alkylgruppe wie Diäthylamin oder Piperidin, und ebensolche Hydroxyamine wie Äthanolamin oder N,N-Diäthanolamin.

Als Neutralisationsmittel **G** sind im Rahmen dieser Erfindung nur tertiäre Amine möglich, wenn die Verbindungen **D** Säuregruppen aufweisen. Bevorzugt werden Trialkyl- und Trialkanolamine wie Triäthylamin, Tripropyl- und Tributylamin sowie Triäthanolamin.

Für die Kettenverlängerung können als Komponente **H** aliphatische Polyamine mit und ohne OH-Gruppen eingesetzt werden. Bevorzugt werden aliphatische Amine mit zwei primären oder sekundären Aminogruppen. Die besonders bevorzugten diprimären Amine können auch weiterer sekundäre Aminogruppen enthalten. Beispiele geeigneter Verbindungen sind Isophorondiamin (IPDA), Äthylendiamin, 1,6-Diaminohexan, 1,4-Diaminobutan, Poly(iminoalkylen)diamine wie Diäthylentriamin (DETA), Triäthylentetramin (TETA), Tetraäthylenpentamin usw. und Umsetzungsprodukte aus primären Aminen und Di- oder Polyepoxiden, wie beispielsweise das Umsetzungsprodukt von Dimethylaminopropylamin und dem Bisglycidyläther von Bisphenol A. Andere geeignete Kettenverlängerungsmittel sind Hydrazin oder organische Bishydrazine oder Bishydrazide.

Es kann notwendig sein, daß die mit diesen Dispersionen hergestellten Lacke, um eine bessere oxydative Durchtrocknung (Vernetzung) zu erreichen, sikkativiert werden müssen. In Frage kommen alle handelsüblichen Sikkative auf Basis von Kobalt, Mangan und anderen Übergangsmetallen. Bindemittel, die mit den oxydativ trocknenden wäßrigen Polyurethan-Dispersionen gemäß der vorliegenden Erfindung hergestellt werden, zeichnen sich aus durch niedrige Lösungsmittelgehalte (niedrige "VOC"-Werte; Gehalt an flüchtigen organischen Verbindungen), und die Möglichkeit der Vernetzung bei Raumtemperatur ohne zusätzliche zweite Komponente. Die damit hergestellten Beschichtungen weisen hohe Härte und gute Kratzfestigkeit auf, sie haben auch, durch die Art der Vernetzung bedingt, hohe Beständigkeit gegenüber Chemikalien.

Die Erfindung wird durch die nachfolgenden Beispiele erläutert.

### Beispiel 1

423 g Leinöl wurden unter Stickstoffatmosphäre mit 76 g Glycerin gemischt und mit 0,02 g Lithiumhydroxid auf 260 °C erwärmt. Bei dieser Temperatur wurde das Gut 1 Stunde gehalten und danach gekühlt. Der Kühlprozeß wurde durch die Zugabe von 418 g Polypropylenglykol (mittlere molare Masse 1010 g/mol), 95 g Dimethylolpropionsäure, 0,09 g Dibutylzinndilaurat und 223 g N-Methyl-2-pyrrolidon unterstützt. Es wurde so lange gekühlt, bis 70 °C erreicht waren, und bei dieser Temperatur so lange gehalten, bis die Mischung eine klare Lösung bildete. Nachdem die Lösung klar war, wurden 398 g Toluylendiisocyanat und gleich danach 171 g 4,4'-Bis-cyclo-hexyl-methylen-diisocyanat zudosiert. Die Mischung wurde so lange bei 70 °C gehalten, bis eine Isocyanatkonzentration von 3 % erreicht war. Diese Mischung wurde dann innerhalb von 10 min in eine 70 °C warme Lösung aus 50,5 g N,N-Dimethyläthanolamin und 1798 g entionisiertem Wasser gegeben. Gleich danach wurde eine Lösung aus 39 g Triäthylentetramin und 352 g entionisiertem Wasser innerhalb von 10 min zu der Dispersion gegeben. Diese Dispersion wurde noch eine Stunde bei 70 °C gehalten und dann abgekühlt. Man erhielt eine Dispersion mit einem Festkörper-Massenanteil von 33 % und einem pH-Wert von 7,5.

### Beispiel 2

423 g Leinöl wurden unter Stickstoffatmosphäre mit 76 g Glycerin gemischt und mit 0,02 g Lithiumhydroxid auf 260 °C erwärmt. Bei dieser Temperatur wurde das Gut 1 Stunde gehalten und danach gekühlt. Der Kühlprozess wurde durch die Zugabe von 418 g Polypropylenglykol (molare Masse 1010 g/mol), 95 g Dimethylolpropionsäure, 0,09 g Dibutylzinndilaurat und 223 g N-Methyl-2-pyrrolidon unterstützt. Es wurde so lange gekühlt, bis 70 °C erreicht waren, und bei dieser Temperatur so lange gehalten, bis die Mischung eine klare Lösung bildete. Nachdem die Lösung klar war, wurden 544,5 g Toluylendiisocyanat zudosiert. Die Mischung wurde so lange bei 70 °C gehalten, bis eine Isocyanatkonzentration von 3 % erreicht war. Dann wurden innerhalb von 5 min 122,7 g N,N-Diäthanolamin zugegeben und 1 Stunde bei 70 °C verrührt. Nach Neutralisieren mit 71 g Triäthylamin und Dispergieren mit 2584 g entionisiertem Wasser erhielt man eine Dispersion mit Festkörper-Massenanteil von 36 % und einem pH-Wert von ca. 7,5.

### Beispiel 3 (Vergleichsbeispiel)

146,7 g Polypropylenglykol (mittlere molare Masse ca. 1000 g/mol), 11,3 g 1,2-Propylenglykol und 18,2 g Dimethylolpropionsäure wurden unter Zusatz von ca. 0,03 g Dibutylzinnoxid in 125,3 g N-Methylpyrrolidon gelöst. Bei ca. 70 °C wurde eine Mischung von technischem Toluylendiisocyanat (69 g) und 29,6 g Bis(4-isocyanatocyclohexyl)methan mit 9,7 g N-Methylpyrrolidon zugefügt und unter Rühren bei dieser Temperatur gehalten, bis der Gehalt an Isocyanatgruppen konstant war. Innerhalb von 5 Minuten wurden 9 g Triäthylamin zugesetzt und anschließend mit 231,1 g voll entsalztem Wasser verdünnt. Diese Mischung wurde in eine Lösung von 5,5 g Triäthylentetramin in 123,2 g Wasser eingerührt. Es wurde eine Dispersion eines Polyurethanharzes in Wasser mit einem Festkörper-Massenanteil von ca. 36 % erhalten.

### Beispiel 4

423 g Leinöl wurden unter Stickstoffatmosphäre mit 76 g Glycerin gemischt und mit 0,02 g Lithiumhydroxid auf 260 °C erwärmt. Bei dieser Temperatur wurde das Gut 1 Stunde gehalten und danach gekühlt. Der Kühlprozess wurde durch die Zugabe von 418 g Polypropylenglykol (molare Masse 1010 g/mol), 145 g Dimethylolpropionsäure, 0,09 g Dibutylzinndilaurat und 354,6 g N-Methyl-2-pyrrolidon unterstützt. Es wurde so lange gekühlt, bis 70 °C erreicht waren, und bei dieser Temperatur so lange gehalten, bis die Mischung eine klare Lösung bildete. Nachdem die Lösung klar war, wurde eine Mischung von 431,8 g Toluylendiisocyanat und 229 g Bis(4-isocyanatocyclohexyl)methan zudosiert. Die Mischung wurde so lange bei 70 °C gehalten, bis eine Isocyanatkonzentration von 3 % erreicht war. Dann wurden innerhalb von 5 min 77,1 g Triäthylamin zugegeben und 1 Stunde bei 70 °C verrührt. Anschließend wurden ca. 3000 ml voll entsalztes Wasser zugegeben und ca. 15 Minuten bei ca. 75 °C nachgerührt. Nach Neutralisieren mit 39 g Triäthylentetramin und Zusatz von weiteren 560 g voll entsalzten Wassers erhielt man nach ca. 15 Minuten Rühren eine homogene Dispersion mit Festkörper-Massenanteil von ca. 32 % und einem pH-Wert von ca. 7,5.

### Beispiel 5

Zu jeweils 100 g der Dispersionen aus den Beispielen 3 (Vergleich) und 4 wurden jeweils 0,5 g eines handelsüblichen Entschäumers (®Tego Foamex 805, Fa. Th. Goldschmidt AG, nichtionische Öl-in-Wasser-Emulsion eines kieselsäurefreien Polyäthersiloxan-Copolymeren mit einem Festkörper-Massenanteil von ca. 24 %)und 0,3 g eines handelsüblichen Benetzungsmittels (®BYK 346, Untergrundbenetzungsmittel, Fa. Byk AG, Polyäther-modifiziertes Dimethylpolysiloxan) zugesetzt und gut gemischt. Dies ergab die Klarlacke 5.1 und 5.2. Zu jeweils einer weiteren derartigen Mischung wurden zusätzlich noch 0,6 g eines Sikkativs auf Basis von Zirkon-, Kobalt- und Mangan-Salzen (Gemisch der Oktoate, Massenverhältnis Zr : Mn : Co = 4,46 : 1,44 : 3,12) zugesetzt. Dies ergab die Klarlacke 5.1a und 5.2a.

Mit diesen Lacken wurden die folgenden Prüfergebnisse erreicht:

| | | | | | |
|---|---|---|---|---|---|
| Klarlack | | 5.1 | 5.1a | 5.2 | 5.2a |
| Klebfreiheit in min | | 380 | 310 | 180 | 160 |
| Pendelhärte in | s n. 24 h | 21 | 22 | 52 | 65 |
| | n. 48 h | 30 | 33 | 63 | 80 |
| | n. 7 d | 29 | 30 | 101 | 111 |

| Beständigkeit / Glas in s | | | | | |
|---|---|---|---|---|---|
| Aceton | | 3 | 7 | 12 | 28 |
| Äthanol | | 14 | 14 | 13 | 60 |

| Beständigkeit / Holz | | | | | |
|---|---|---|---|---|---|
| Aceton | nach 10 s | 5 | 5 | 0 | 0 |
| Äthanol | nach 1 h | 5 | 5 | 2 | 2 |
| VE-Wasser | nach 16 h | 2 | 1 | 2 | 2 |
| Kaffee | nach 16 h | 4 | 4 | 3 | 3 |
| Fülle | | 30 | 30 | 25 | 25 |
| Oberflächenhärte | | 40 | 40 | 25 | 20 |
| Gelbfärbung | | 25 | 40 (rosa) | 20 | 25 |

Die Tests an den Beschichtungen wurden folgendermaßen durchgeführt:
- Klebfreiheit:: Drying Recorder, 150 µm Naßfilm-Schichtdicke auf Glasstreifen, Trocknung bei 20 °C, angegebene Zeit in Minuten bis zur Klebfreiheit
- Pendelhärte:: nach König (DIN 53 157), 150 µm Naßfilm-Schichtdicke auf einer Glasplatte, Trocknung bei 20 °C 24 h bis 7 d, Messung nach der betreffenden Trocknungszeit
- Beständigkeiten:: auf Glasplatten: 150 µm Naßfilm-Schichtdicke, Trocknung bei 20 °C während 7 Tagen; die angegebene Zeit ist die Zeit, nach der bei Wischen mit einem Lösungsmittel-getränkten Wattebausch der Lack angegriffen wird.
auf Holz: zweimalige Lackierung mit jeweils 200 µm naßfilm-Schichtdicke, Trocknung jeweils 2 Wochen bei 20 °C, Prüfung nach DIN 68 861 Teil 1B mit den genannten Prüf-Flüssigkeiten (Bewertung: 0 = keine sichtbaren Veränderungen; 1 = eben erkennbare Veränderungen in Glanz oder Farbe; 2 = leichte Veränderungen in Glanz oder Farbe; Struktur der Prüffläche ist unverändert; 3 = starke Markierungen sichtbar, die Struktur der Prüffläche ist jedoch weitgehend unbeschädigt; 4 = starke Markierungen sichtbar, die Struktur der Prüffläche ist verändert; 5 = Prüffläche ist stark verändert oder zerstört)
- Fülle, Oberflächenhärte:: Furniertes Holz, zweimalige Lackierung mit jeweils 200 µm Naßfilm-Schichtdicke, Lagerung zwei Wochen bei Raumtemperatur (20 °C), Beurteilung nach Bewertung (10 = sehr gut; 50 = sehr schlecht)
- Gelbfärbung:: Lackierung auf Ahorn furniert; 200 µm Naßfilm-Schichtdicke, Lagerung zwei Wochen bei Raumtemperatur (20 °C), Beurteilung nach Bewertung (1 = kein merkbare Veränderung; 5 = sehr starke Verfärbung)

## Patentansprüche

1. Oxydativ trocknende wäßrige Polyurethan-Dispersionen, dadurch gekennzeichnet, daß sie erhältlich sind durch Umsetzung von trocknenden und/oder halbtrocknenden Ölen **A** mit niedermolekularen Hydroxyverbindungen **B** mit zwei oder mehr Hydroxylgruppen zu Verbindungen **AB**, die im Mittel mindestens eine Hydroxylgruppe und mindestens einen Rest einer Fettsäure mit mindestens einer olefinischen Doppelbindung enthalten, anschließender Umsetzung der Verbindungen **AB** gemeinsam mit hochmolekularen Polyolen **C**, weiteren Verbindungen ausgewählt aus Verbindungen **D** mit mindestens zwei gegenüber Isocyanat reaktiven Gruppen und mindestens einer Säuregruppe und Verbindungen **D** 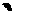 mit mindestens zwei gegenüber Isocyanat reaktiven Gruppen und einer funktionellen Gruppe, die nach Neutralisation zu einer kationischen Gruppe führt, mit mehrfunktionellen Isocyanaten **E** zu Präpolymeren **ABCDE** mit einem Massenanteil an nicht umgesetzten Isocyanatgruppen von 0,1 bis 4 %, bezogen auf die Masse des Präpolymeren, gegebenenfalls Umsetzung des Präpolymeren **ABCDE** mit einer Verbindung **F** mit einer gegenüber Isocyanat reaktiven Gruppe, anschließende Neutralisation mit tertiären Aminen **G**, gegebenenfalls Umsetzung noch vorhandener überschüssiger Isocyanatgruppen durch Zugabe von Kettenverlängerungsmitteln **H** mit mindestens zwei primären oder sekundären Aminogruppen und Überführung in die wäßrige Phase.

2. Oxydativ trocknende wäßrige Polyurethan-Dispersionen nach Anspruch 1, dadurch gekennzeichnet, daß vor dem Neutralisations-Schritt eine Umsetzung des Präpolymeren **ABCDE** mit einer Verbindung **F** mit einer gegenüber Isocyanat reaktiven Gruppe erfolgt.

3. Oxydativ trocknende wäßrige Polyurethan-Dispersionen nach Anspruch 1, dadurch gekennzeichnet, daß nach dem Neutralisations-Schritt noch vorhandene überschüssige Isocyanatgruppen durch Zugabe von Kettenverlängerungsmitteln **H** mit mindestens zwei primären oder sekundären Aminogruppen umgesetzt werden.

4. Oxydativ trocknende wäßrige Polyurethan-Dispersionen nach Anspruch 1, dadurch gekennzeichnet, daß als Polyole **B** dreiwertige Polyole ausgewählt aus Glycerin, Trimethyloläthan und Trimethylolpropan eingesetzt werden.

5. Oxydativ trocknende wäßrige Polyurethan-Dispersionen nach Anspruch 1, dadurch gekennzeichnet, daß als hochmolekulare Polyole **C** Polyätherpolyole ausgewählt aus Polyäthylenglykol und Mischpolymeren mit Oxyäthylen- und Oxypropylen-Bausteinen eingesetzt werden.

6. Oxydativ trocknende wäßrige Polyurethan-Dispersionen nach Anspruch 1, dadurch gekennzeichnet, daß als Verbindungen **D** Dihydroxysäuren, Diaminosäuren oder Hydroxyaminosäuren eingesetzt werden.

7. Oxydativ trocknende wäßrige Polyurethan-Dispersionen nach Anspruch 1, dadurch gekennzeichnet, daß zur Herstellung des Präpolymeren die Verbindungen **AB** umgesetzt werden mit hochmolekularen Polyolen **C**, Verbindungen **D** 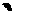 mit mindestens zwei gegenüber Isocyanat reaktiven Gruppen und einer funktionellen Gruppe, die nach Neutralisation zu einer kationischen Gruppe führt, und mehrfunktionellen Isocyanaten **E**.

8. Oxydativ trocknende wäßrige Polyurethan-Dispersionen nach Anspruch 1, dadurch gekennzeichnet, daß die Isocyanate **E** ausgewählt sind aus Toluylendiisocyanat, Tetramethylxylylendiisocyanat, Bis(4-isocyanatocyclohexyl)-methan und Isophorondiisocyanat.

9. Oxydativ trocknende wäßrige Polyurethan-Dispersionen nach Anspruch 2, dadurch gekennzeichnet, daß als kettenabbrechende Verbindung **F** Dialkylamine oder Hydroxyamine eingesetzt werden.

10. Oxydativ trocknende wäßrige Polyurethan-Dispersionen nach Anspruch 2, dadurch gekennzeichnet, daß als kettenverlängernde Verbindungen **H** aliphatische Polyamine mit zwei primären oder sekundären Aminogruppen eingesetzt werden.

11. Verfahren zur Herstellung von oxydativ trocknenden wäßrigen Polyurethan-Dispersionen nach Anspruch 1, dadurch gekennzeichnet, daß in einer ersten Stufe a) trocknende oder halbtrocknende Öle **A** mit niedermolekularen Hydroxyverbindungen **B** mit zwei oder mehr Hydroxylgruppen pro Molekül unter alkalischer Katalyse umgesetzt werden, anschließend in der zweiten Stufe b) dieses Umesterungsprodukt **AB**, das hochmolekulare Polyol **C** und die Komponente **D** bzw. **D'** vermischt, und sodann die Isocyanat-Komponente **E** zugefügt wird , und schließlich die Mischung in der Stufe c) in eine warme Lösung des tertiären Amins **G** in entionisiertem Wasser (Massenanteil des Amins im Wasser 10 bis 40 %) eingerührt wird.

12. Bindemittel für Holzlacke, enthaltend eine oxydativ trocknende Polyurethan-Dispersion gemäß Anspruch 1.
